(19) Europäisches Patentamt
European Patent Office
Office européen des brevets

(11) **EP 4 121 782 B1**

(12) **EUROPEAN PATENT SPECIFICATION**

(45) Date of publication and mention
of the grant of the patent:
**18.12.2024 Bulletin 2024/51**

(21) Application number: **21718647.7**

(22) Date of filing: **17.03.2021**

(51) International Patent Classification (IPC):
*G01P 21/00* (2006.01)    *G01P 15/18* (2013.01)
*B60L 3/10* (2006.01)    *B60T 8/17* (2006.01)
*B60L 58/27* (2019.01)    *B60T 8/172* (2006.01)

(52) Cooperative Patent Classification (CPC):
**G01P 21/00; B60L 3/10; B60L 58/27; B60T 8/1705;
B60T 8/172; G01P 15/18;** B60L 2200/26;
B60L 2240/16; B60L 2240/545; Y02T 10/70

(86) International application number:
**PCT/IB2021/052211**

(87) International publication number:
**WO 2021/186355 (23.09.2021 Gazette 2021/38)**

(54) **METHOD FOR ESTIMATING A LONGITUDINAL ACCELERATION OF AT LEAST ONE RAILWAY VEHICLE**

VERFAHREN ZUR SCHÄTZUNG EINER LÄNGSBESCHLEUNIGUNG MINDESTENS EINES SCHIENENFAHRZEUGS

PROCÉDÉ D'ESTIMATION D'UNE ACCÉLÉRATION LONGITUDINALE D'AU MOINS UN VÉHICULE FERROVIAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.03.2020 IT 202000005671**

(43) Date of publication of application:
**25.01.2023 Bulletin 2023/04**

(73) Proprietor: **Faiveley Transport Italia S.p.A.
10045 Piossasco (TO) (IT)**

(72) Inventor: **FREA, Matteo
10060 Cantalupa (Torino) (IT)**

(74) Representative: **Cristinelli, Luca
Jacobacci & Partners S.p.A.
Corso Emilia, 8
10152 Torino (IT)**

(56) References cited:
WO-A1-2007/042290    JP-A- 2005 083 936
US-A- 4 321 678    US-A1- 2014 136 048

**Description**

Technical field

This invention generally lies within the railway vehicle sector; in particular, this invention relates to a method for estimating a longitudinal acceleration of at least one railway vehicle.

Prior art

Slippage (also known as slip, slide or sliding) is understood to be a condition where there is a difference between the rotational speed of the axle and the speed of travel of the vehicle. This difference is defined as the slippage speed.
The slippage speed may be calculated using the following formula:

$$V_{sliding} = V_{RV} - \omega_{axle} * R \qquad (1)$$

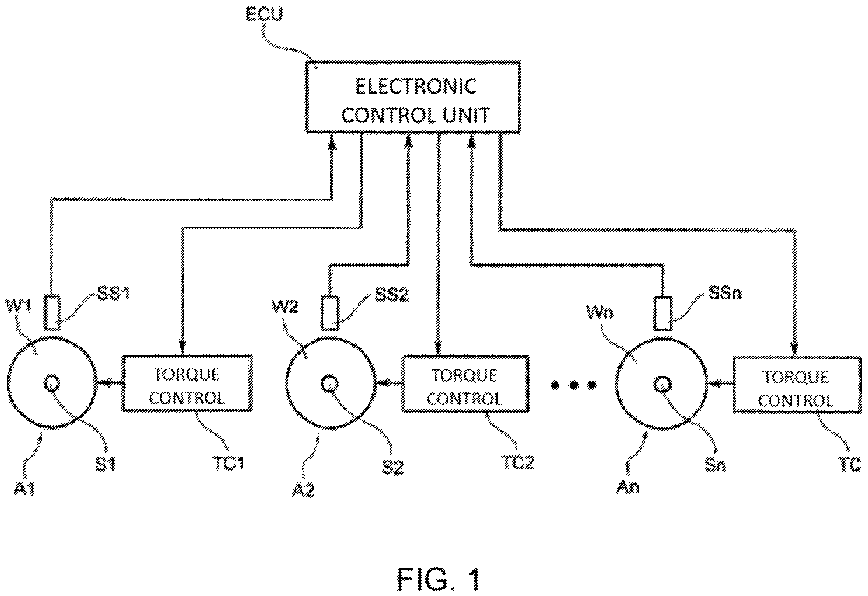

where $V_{RV}$ is the longitudinal speed of travel of the railway vehicle, $\omega_{axle}$ is the angular speed of the axle, and R is the radius of the wheel.
More modem railway vehicles have electronic systems installed on board that generally include subsystems for controlling the slippage of the wheels, which subsystems are adapted to intervene when the vehicle is in a traction phase or when the vehicle is in a braking phase. Subsystems of this kind are known as anti-skid or anti-slide systems or are also known as WSP (wheel slide protection) systems.
A system for controlling the adhesion of the wheels in an anti-slippage function according to the prior art is shown schematically in Fig. 1, which refers to a vehicle comprising n controlled axles A1, A2, ..., An. The axles A1, A2, ..., An comprise a relative shaft S1, S2, ..., Sn and a relative pair of wheels W1, W2, ..., Wn rotationally integral therewith.
In the drawings, only one wheel of each axle is generally shown.
The WSP system in Fig. 1 comprises an electronic control unit ECU, typically based on a microprocessor architecture, which receives tachometric signals relating to the angular speed of each axle A1, A2, ..., An from sensors SS1, SS2, ..., SSn respectively associated with these axles. The electronic unit ECU is also connected to torque control devices TC1, TC2, ..., TCn which are each associated with a relevant axle A1, A2, ..., An.
The electronic unit ECU is arranged to modulate the torque applied to each axle according to a predetermined algorithm if, when torque is applied during a traction or braking phase in situations of degraded adhesion, the wheels of one or more axles result in a condition of possible incipient slippage. The torque is modulated in such a way as to prevent the axles from jamming completely, possibly in such a way as to bring each axle into a controlled sliding situation, with a view to recover adhesion and in any case for the entire duration of the situation of degraded adhesion.
It is evident that knowledge of the instantaneous speed of the vehicle $V_{RV}(t)$ is fundamental for correctly controlling the slippage.
One known method for accurately tracking the speed of a railway vehicle requires the maintenance of an idle axle, i.e. an axle which is not subjected to traction or braking torques. This is required to ensure that the measurement of its speed is the best reproduction of the real speed $V_{real}$ of said railway vehicle. This solution is particularly effective in the case of particularly low adhesion between the wheels and the track. In this case, in the event of traction or braking, all of said wheels could enter a slippage condition and would therefore not be able to provide correct information regarding the real speed of the vehicle. An idle axle which is not subjected to traction or braking torques could continue to accurately track the speed of the vehicle.
Modem railway vehicle architectures, particularly for underground railways, tend to have very limited compositions, for example are made of two carriages. In this case, the use of an "idle" axle would lead to a significant loss of traction and braking capacity of the train.

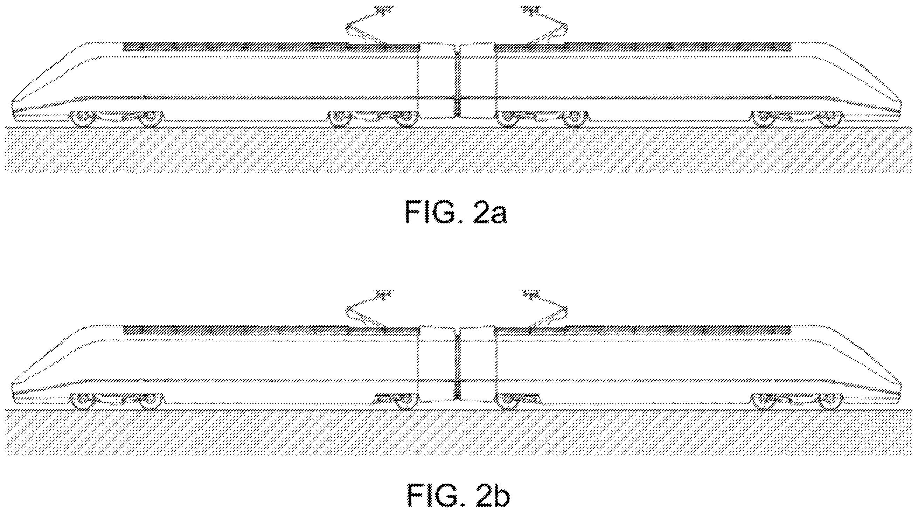

Fig. 2.a shows an example composition comprising two independent cars while Fig. 2.b shows an example composition comprising two cars constrained by means of a Jacobs bogie. It is evident that the use of an idle axle disadvantageously reduces the traction and braking capacity by 12.5% in the first case and by so much as 16.7% in the second case.
In the prior art, there are also systems based on accelerometric sensors for measuring the forward speed of a vehicle.
Given the increasing availability and the progressive reduction in cost of MEMS ("micro electro-mechanical systems"), more and more electronic devices, regardless of their main application, integrate an accelerometric sensor, typically a triaxial accelerometric sensor, on board.
The use of an accelerometric sensor for estimating the longitudinal acceleration of the vehicle is, in principle, easily applicable.

Longitudinal acceleration is understood to mean the acceleration of the vehicle in its direction of travel. By integrating this longitudinal acceleration over time, the longitudinal speed, i.e. the speed of travel of the vehicle, is obtained. This methodology is clearly not affected by the above-described slippage problems to which the axles may be subjected in the event of degraded adhesion.

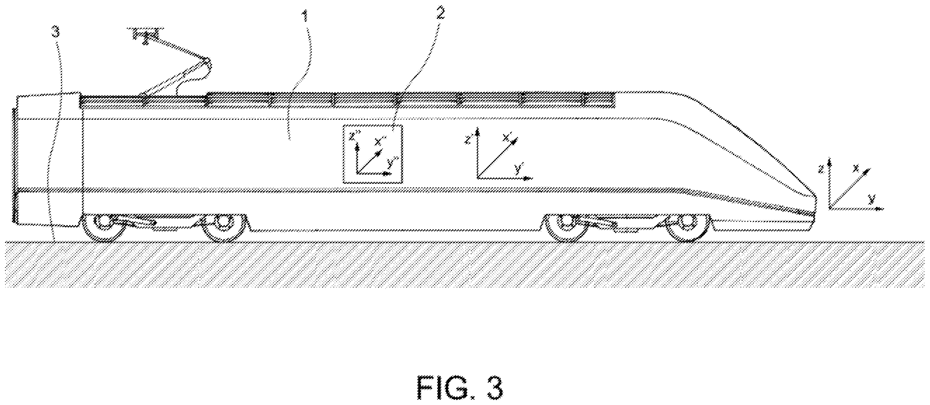

With reference to Fig. 3, a railway vehicle 1 is travelling on a track 3 and provided with an accelerometric sensor 2.

In the terrestrial/gravitational reference system, axis z may be defined as the direction of gravitational acceleration and axes x and y may be defined as the transverse directions on the plane perpendicular to z.

In the reference system integral with the vehicle, however, axis y' may be defined as the longitudinal direction of the vehicle, axis x' may be defined as the transverse direction of the vehicle and axis z' may be defined as the direction perpendicular to the plane ("floor") of the vehicle.

Furthermore, x", y" and z" may be defined as the sensitive axes of the triaxial accelerometric sensor.

Now considering the ideal case in which the sensor is installed integrally with the vehicle, with the axes perfectly aligned with those of the vehicle, this will result in:

$$x' \equiv x''$$

$$y' \equiv y''$$

$$z' \equiv z''$$

Also considering the particular case in which the vehicle 1 is travelling on a section of track 3 that is perfectly straight and has no gradient, this will result in:

$$x' \equiv x'' \equiv x$$

$$y' \equiv y'' \equiv y$$

$$z' \equiv z'' \equiv z$$

In these ideal conditions, the longitudinal acceleration of the vehicle may be directly deduced from the accelerometer measurements being:

$$a_{train} = a_y \qquad\qquad (2)$$

where $a_{train}$ is the longitudinal acceleration of the vehicle and $a_y$ is the acceleration measured by the accelerometric sensor on the axis y" of the sensor.

The speed of travel of the vehicle may then be calculated as a temporal integration of the acceleration value:

$$v_{train}(t) = \int_0^t a_{train} \ dt \qquad\qquad (3)$$

or, in the case of discrete acquisition systems:

$$v_{train}(t) = \sum_0^n a_{train} * \Delta T \qquad\qquad (4)$$

where $\Delta T$ is the sampling period of the electronic acquisition system and $n$ is the number of samples acquired at the time t.

However, this methodology, which has been greatly simplified by the above assumptions, is not actually applicable in a real context.

Although it may be mounted with precision, the accelerometric sensor that is integrated in an electronic circuit board on board the vehicle will not have its sensitive axes x", y" and z" perfectly aligned with those of the vehicle x', y' and z'.

Moreover, the hypothesis that the vehicle 1 is travelling on a section of track 3 that is perfectly straight and has no gradient is not applicable in practice either, because the railway vehicle may travel on sections that are curved and/or have a non-zero gradient.

The invalidity of the aforementioned assumptions opens the way to geometric scenarios in which the three reference systems (gravitational, vehicle and accelerometer) have relative angles on the 3 axes.

The angles of rotation between the vehicle reference system and the gravitational reference system may be defined as $\alpha$, $\beta$, $\varphi$, for the axes x, y, z, respectively.

The angles of rotation between the accelerometer reference system and the vehicle reference system may be defined as $\alpha'$, $\beta'$, $\varphi'$, for the axes x, y, z, respectively.

The angles $\alpha$, $\beta$, $\varphi$ are unknown to the electronic unit that acquires the accelerometer, but they are constant over time since they depend only on the mounting of the accelerometer relative to the vehicle.

The angles $\alpha'$, $\beta'$, $\varphi'$, as well as being unknown to the electronic unit that acquires the accelerometer, are not constant over time since they depend on the curvature and gradient of the local section of track.

Since the angles $\alpha$, $\beta$, $\varphi$ and the angles $\alpha'$, $\beta'$, $\varphi'$ are unknown and unrelated to each other, the problem of determining the longitudinal acceleration of the vehicle from the measurements of a triaxial accelerometer mounted on board the vehicle may not be solved analytically and/or geometrically.

For example, WO2017042138 proposes an analytical/geometric method for determining the orientation of an accelerometric sensor with respect to the vehicle on which the sensor is mounted. This method is based on the availability of:

- a "free state," i.e. a state of a railway vehicle that is stationary or at a constant speed, in which state the accelerometric sensor is subjected only to the gravitational force;
- availability, even discontinuous availability, of a source of speed of the railway vehicle that is reliable and external to the accelerometer.

The availability, even discontinuous availability, of a reliable measurement of speed of the railway vehicle that is external to the accelerometer is plausible if one considers that the angular speed of the axles (measured by the sensors SS in Fig. 1) is reliable in all cases of non-degraded adhesion, which are still the majority. The role of the accelerometric sensor, and of the method for estimating the speed of the railway vehicle therefrom, will be that of being used in situations of degraded adhesion in which the axles are all in slippage and their angular speed is not representative of the speed of the railway vehicle or train.

However, the method proposed in WO2017042138 is fundamentally based on two assumptions:

1) during the "free state," the vehicle is on a perfectly level section of track (gradient equal to zero);
2) in the phases of using the speed external to the accelerometer, the railway vehicle or train is on a perfectly straight section of track. The transverse acceleration component (axis x) is therefore disregarded and is instead present in the curvilinear sections.

The assumptions on which WO2017042138 is based are greatly limiting and do not ensure the operation of this method in a real application.

The most commonly used algorithm for estimating the real speed Vv(t) of the vehicle, in the event of braking, normally uses a function such as:

$$V_v\left(T_j\right) = \max[S_1\left(T_j\right), .., S_n\left(T_j\right), \left(V_v\left(T_{j-1}\right) + a_{max} \cdot T\right)] \quad (5)$$

whereas in the event of traction it uses the function

$$V_v\left(T_j\right) = \min[S_1\left(T_j\right), .., S_n\left(T_j\right), \left(V_v\left(T_{j-1}\right) + a_{max} \cdot T\right)] \quad (6)$$

where $a_{max}$ represents the maximum acceleration allowed in operation by the vehicle, this acceleration having a positive sign in traction conditions and a negative sign in braking conditions. The contribution $(V_v(T_{j-1}) + a_{max} \cdot T)$ in formulas (5) and (6) is used to contain the variation of Vv(t) within physical limits allowed by the train, when excessive instantaneous and simultaneous variations of the axle speeds due to particularly degraded adhesion conditions during traction or braking could lead to a significant loss in the speed Vv(t) calculated using formulas (5) and (6).

More accurate variants of formulas (5) and (6) are known, but are still based on the instantaneous measurement of the individual speed of the axles. Here it is clear that the availability of an idle axle would make formulas (5) and (6) extremely accurate if all the axles subjected to torque were in the slippage phase.

US 2014/136048 A1 discloses a system and a method for compensating a misalignment characteristic of one or more acceleration sensors fixed to a sprung mass of a vehicle. However, the above-mentioned problems remain unresolved.

Summary of the invention

An object of this invention is therefore to provide a method for estimating a longitudinal acceleration of at least one railway vehicle and a method for estimating a longitudinal speed of at least one railway vehicle, which methods allow, respectively, the longitudinal acceleration and the longitudinal speed of the vehicle to be measured even in a condition in which all of the axles of said vehicle are in a slippage phase caused by degraded adhesion.

A further object of this invention is therefore to allow the use of the idle axle to be fully recovered for traction and braking purposes, even in the case of particularly low adhesion, thus increasing the traction and braking capacity of the train while allowing said axis to accurately track the speed of the train in order to accurately evaluate the longitudinal forward speed.

The method for estimating a longitudinal speed and the method for estimating a longitudinal acceleration may be applied to both slippage situations in a traction phase (negative $V_{slippage}$) and slippage situations in a braking phase (positive $V_{slippage}$).

This invention allows for the most precise knowledge of the longitudinal speed of a railway vehicle, so as to facilitate and improve, for example, the piloting of control systems, anti-slippage systems, and odometric references installed on board.

The aforesaid and other objects and advantages are achieved, according to an aspect of the invention, by a method for estimating a longitudinal acceleration of at least one railway vehicle having the features defined in claim 1 and in claim 2, respectively, and by methods for estimating a longitudinal acceleration of at least one railway vehicle having the features defined in the respective claims 10 and 12. Preferred embodiments of the invention are defined in the dependent claims, the content of which is to be understood as an integral part of the present description.

Brief description of the drawings

The functional and structural features of some preferred embodiments of a method for estimating a longitudinal speed of at least one railway vehicle according to the invention will now be described. Reference is made to the appended drawings, in which:

- Fig. 1 shows a WSP system produced in accordance with the prior art;
- Fig. 2a shows an example composition comprising two independent cars while Fig. 2.b shows an example composition comprising two cars constrained by means of a Jacobs bogie;
- Fig. 3 shows a railway vehicle travelling on a track and provided with an accelerometric sensor;
- Fig. 4 shows an example system which may be used to implement an embodiment of this invention; and
- Fig. 5 shows a plurality of explanatory graphs of the trend over time of the speed of the railway vehicle, the availability of the independent longitudinal reference speed and the direction cosines.

Detailed description

Before describing a plurality of embodiments of the invention in detail, it should be clarified that the invention is not limited in its application to the construction details and configuration of the components presented in the following description or illustrated in the drawings. The invention is capable of assuming other embodiments and of being implemented or constructed in practice in different ways. It should also be understood that the phraseology and terminology have a descriptive purpose and should not be construed as limiting. The use of "include" and "comprise" and their variations is to be understood as encompassing the elements set out below and their equivalents, as well as additional elements and the equivalents thereof.

This invention proposes a method for calculating an estimated longitudinal acceleration of at least one railway vehicle, and thereafter a method for calculating an estimated longitudinal speed of the railway vehicle, using an accelerometric sensor means, for example a triaxial accelerometric sensor means.

The method for estimating a longitudinal acceleration of at least one railway vehicle requires the availability, even discontinuous availability, of a measurement of the speed of the train that is independent from the accelerometer, in the following referred to as the independent longitudinal reference speed $V_{ref}$ of the railway vehicle. The method for estimating a longitudinal acceleration of at least one railway vehicle is based on obtaining the direction cosines of a 3x3 orientation matrix such that, if multiplied by the measurements from the sensor having 3 orthogonal axes, an estimated longitudinal acceleration of the vehicle is obtained. By integrating the estimated longitudinal acceleration of the vehicle, it is possible to obtain an estimated longitudinal speed of the vehicle.

The main equation used is as follows:

$$k_1 * a_x(t) + k_2 * a_y(t) + k_3 * a_z(t) = a_{ref}(t) \qquad (7)$$

where:

- $k_1$, $k_2$ and $k_3$ are numerical values of direction cosines, $k_1$, $k_2$ and $k_3$ being the variables of the equation;
- $a_x(t)$, $a_y(t)$, $a_z(t)$ are accelerations detected by the accelerometric sensor means on its three orthogonal axes in a generic instant t;
- $a_{ref}(t)$ is an independent reference acceleration at the instant t, determined by means of a derivative at the instant t of an independent reference longitudinal speed (i.e. travel speed) $v_{ref}$, i.e.:

$$a_{ref}(t) = \frac{dv_{ref}}{dt}(t)$$

In order for it to be possible to calculate the derivative of the independent longitudinal reference speed at the instant t, this independent longitudinal reference speed must be measured for at least one time interval containing the instant t. For example, the interval may be 20 ms, 100 ms, etc.

The unknowns of this equation are the values of $k_1$, $k_2$ and $k_3$.

Equation (7) is valid only in cases in which the independent longitudinal reference speed $v_{ref}$ described above is available.

Regardless of the technique used, solving equation (7) during the phases in which the independent longitudinal reference speed $v_{ref}$ is available means that the coefficients $k_1$, $k_2$ and $k_3$ may be dynamically updated such that their linear combination with the accelerations measured by the sensor results in the estimated longitudinal acceleration of the railway vehicle or train.

In the following, a first embodiment of a method for estimating a longitudinal acceleration of at least one railway vehicle by means of an accelerometric sensor means 100 is described. The accelerometric sensor means 100 is arranged to measure a first acceleration $a_x$ along a first axis x, a second acceleration $a_y$ along a second axis y and a third acceleration $a_z$ along a third axis z. The first axis x, the second axis y and the third axis z are orthogonal to each other.

The method for estimating a longitudinal acceleration of at least one railway vehicle comprises a first calibration phase which includes the steps of:

- measuring, in a first calibration instant $t_{c1}$ in which an independent longitudinal reference speed $v_{ref}$ of the railway vehicle is available, a first value of the first acceleration $a_x(t_{ci1}$, a first value of the second acceleration $a_y(t_{c1})$ and a first value of the third acceleration $a_z(t_{c1})$, wherein the independent longitudinal reference speed vref is independent from said accelerometric sensor means (100);
- measuring, in a second calibration instant $t_{c2}$ in which said independent longitudinal reference speed $v_{ref}$ of the railway vehicle is available, which second calibration instant is different from said first calibration instant $t_{c1}$, a second value of the first acceleration $a_x(t_{c2})$, a second value of the second acceleration $a_y(t_{c2})$ and a second value of the third acceleration $a_z(t_{c2})$;
- measuring, in a third calibration instant $t_{c3}$ in which said independent longitudinal reference speed $v_{ref}$ of the railway vehicle is available, which third calibration instant is different from said first calibration instant $t_{c1}$ and from said second calibration instant $t_{c2}$, a third value of the first acceleration $a_x(t_{c3})$, a third value of the second acceleration $a_y(t_{c3})$ and a third value of the third acceleration $a_z(t_{c3})$;
- calculating the value of a first independent longitudinal reference acceleration $a_{ref}(t_{c1})$ in the first calibration instant $t_{c1}$ from a first value of the independent longitudinal reference speed $v_{ref}(t_{c1})$ measured in the first calibration instant $t_{c1}$;
- calculating the value of a second independent longitudinal reference acceleration $a_{ref}(t_{c2})$ in the second calibration instant $t_{c2}$ from a second value of the independent longitudinal reference speed $v_{ref}(t_{c2})$ measured in the second calibration instant $t_{c2}$;
- calculating the value of a third independent longitudinal reference acceleration $a_{ref}(t_{c3})$ in the third calibration instant $t_{c3}$ from a third value of the independent longitudinal reference speed $v_{ref}(t_{c3})$ measured in the third calibration instant $t_{c3}$; - solving the following system, in order to determine the values of the first direction cosine ki, the second direction

cosine $k_2$ and the third direction cosine $k_3$:

$$\begin{cases} k_1 * a_x(t_{c1}) + k_2 * a_y(t_{c1}) + k_3 * a_z(t_{c1}) = a_{ref}(t_{c1}) \\ k_1 * a_x(t_{c2}) + k_2 * a_y(t_{c2}) + k_3 * a_z(t_{c2}) = a_{ref}(t_{c2}) \\ k_1 * a_x(t_{c3}) + k_2 * a_y(t_{c3}) + k_3 * a_z(t_{c3}) = a_{ref}(t_{c3}) \end{cases} \quad (8)$$

Clearly, the calibration instants may all be obtained in a single continuous calibration interval in which the independent longitudinal reference speed of the railway vehicle is available, or the calibration instants may be obtained in several calibration intervals in which the independent longitudinal reference speed of the railway vehicle is available. In the second case, the various calibration intervals may be separated by intervals in which the independent longitudinal reference speed of the railway vehicle is not available.

In other words, it is possible to measure of values of $a_x$, $a_y$, $a_z$ and $v_{ref}$ in three different calibration instants $t_{c1}$, $t_{c2}$, $t_{c3}$ provided that the independent longitudinal reference speed $v_{ref}$ is available, so as to have a system of three equations. This system of three equations in three unknowns may be solved both by an analytical method and by a numerical method. Furthermore, by acquiring the measurements at further instants (i.e. more than 3 times), it is possible to recursively increase and update the accuracy of the solutions $k_1$, $k_2$, $k_3$ over time.

In the present case, saying that the independent longitudinal reference speed $v_{ref}$ is independent from the accelerometric sensor means 100 is understood to mean that the independent longitudinal reference speed is not a speed obtained by means of said accelerometric sensor means.

In the present case, stating that the independent longitudinal reference speed $v_{ref}$ is available may be understood to mean the case in which the independent longitudinal reference speed $v_{ref}$ may be used in the method for estimating a longitudinal acceleration of at least one railway vehicle that is the subject of the present invention since it is accessible and reflects the real longitudinal speed at which the railway vehicle is moving along a track. The method for estimating a longitudinal acceleration of at least one railway vehicle also comprises a further measurement phase following said calibration phase.

This measurement phase comprises the steps of:

- determining, for at least a first measurement instant $t_{i1}$ in which said independent longitudinal reference speed of the railway vehicle is not available, an estimated longitudinal acceleration value $at_{lon}(t_{i1})$ of the at least one railway vehicle.

The estimated longitudinal acceleration value $a_{lon}(t_{i1})$ is relative to said measurement instant $t_{i1}$ and is estimated by means of the sum of:

- a multiplication of the first direction cosine ki, determined during the calibration phase, with a fourth value of the first acceleration $a_x(t_{i1})$ acquired in said first measurement instant $t_{i1}$;
- a multiplication of the second direction cosine $k_2$, determined during the calibration phase, with a fourth value of the second acceleration $a_y(t_{i1})$ acquired in said first measurement instant $t_{i1}$;
- a multiplication of the third direction cosine $k_3$, determined during the calibration phase, with a fourth value of the third acceleration $a_z(t_{i1})$ acquired in said first measurement instant $t_{i1}$.

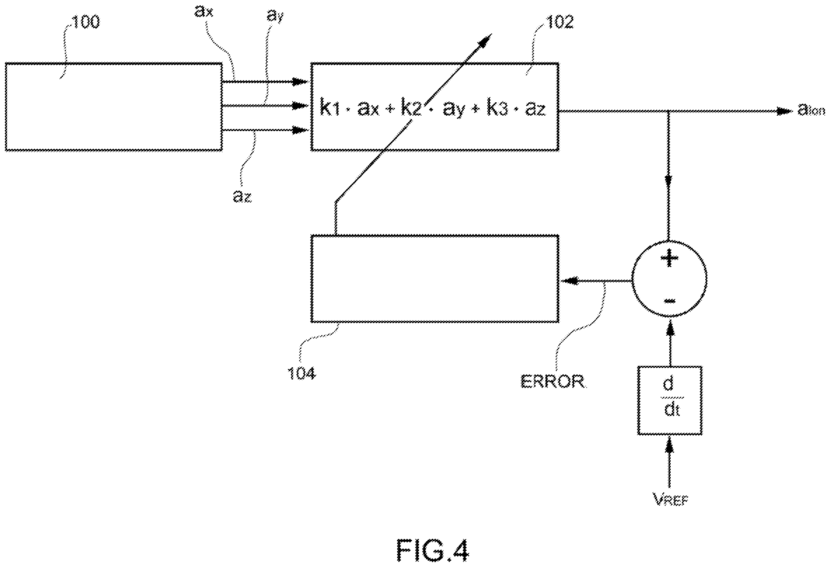

In one alternative embodiment, with reference to Fig. 4, the method for estimating a longitudinal speed of at least one railway vehicle again comprises a calibration phase which includes the step of:

- estimating, by means of a linear filter, for at least a first calibration instant $t_{c1}$ in which an independent longitudinal reference speed $v_{ef}$ of the railway vehicle is available, an estimated longitudinal acceleration value $a_{lon}(t_{c1})$ of the at least one railway vehicle. The independent longitudinal reference speed $v_{ref}$ is also independent from said accelerometric sensor means 100 in this case.

The estimated longitudinal acceleration value $a_{lon}(t_{c1})$ is relative to said calibration instant $t_{c1}$ and is estimated by the linear filter by means of the sum of:

- a multiplication of a first direction cosine ki having a predetermined value with a first value of the first acceleration $a_x(t_{c1})$ acquired in said first calibration instant $t_{c1}$;
- a multiplication of a second direction cosine $k_2$ having a predetermined value with a first value of the second acceleration $a_y(t_{c1})$ acquired in said first calibration instant $t_{c1}$;

- a multiplication of a third direction cosine $k_3$ having a predetermined value with a first value of the third acceleration $a_z(t_{c1})$ acquired in said first calibration instant $t_{c1}$.

In this embodiment, the calibration phase also includes the steps of:

- determining an estimate error, Error, by means of the difference between the estimated longitudinal acceleration value $a_{lon}(t_{c1})$, relative to said first calibration instant $t_{c1}$, and an independent longitudinal reference acceleration value $a_{ref}(t_{c1})$ which is relative to the first calibration instant $t_{c1}$ and determined from a first value of the independent longitudinal reference speed value $v_{ref}(t_{c1})$ measured in the first calibration instant $t_{c1}$;
- determining, by means of an adaptive filter (104), respective updated values of the first direction cosine ki, the second direction cosine $k_2$ and the third direction cosine $k_3$ to be imposed onto said linear filter in order to minimize said estimate error.

When the calibration phase is started for the first time, the values of the first direction cosine ki, the second direction cosine $k_2$ and the third direction cosine $k_3$ may be predetermined. For example, they may be a predetermined default value that will be gradually adjusted as the calibration is performed in various calibration instants, or they may be a predetermined value equivalent to the value of the first direction cosine ki, the second direction cosine $k_2$ and the third direction cosine $k_3$ that were calibrated during a previous operation of the railway vehicle.

In other words, solving the equation may be based on the use of adaptive algorithms. The error may be obtained by comparing the output of the linear filter with the reference longitudinal acceleration value obtained by deriving the independent longitudinal reference speed $v_{ref}$. This error is used by the adaptive filter to dynamically recalculate the coefficients of the linear filter $k_1$, $k_2$, $k_3$ in order to recursively minimize the error.

In this alternative embodiment too, the method for estimating a longitudinal speed of at least one railway vehicle also comprises a further measurement phase following said calibration phase.

This measurement phase comprises the step of:

- determining, by means of said linear filter, for at least a first measurement instant $t_{i1}$ in which said independent longitudinal reference speed of the railway vehicle is not available, an estimated longitudinal acceleration value $a_{lon}(t_{i1})$ of the at least one railway vehicle.

The estimated longitudinal acceleration value $a_{lon}(t_{i1})$ is relative to said measurement instant $t_{i1}$ and is estimated by means of the sum of:

- a multiplication of the updated value of the first direction cosine ki, determined during the calibration phase, with a value of the first acceleration $a_x(t_{i1})$ acquired in said first measurement instant $t_{i1}$;
- a multiplication of the updated value of the second direction cosine $k_2$, determined during the calibration phase, with a value of the second acceleration $a_y(t_{i1})$ acquired in said first measurement instant $t_{i1}$;
- a multiplication of the updated value of the third direction cosine $k_3$, determined during the calibration phase, with a value of the third acceleration $a_z(t_{i1})$ acquired in said first measurement instant $t_{i1}$.

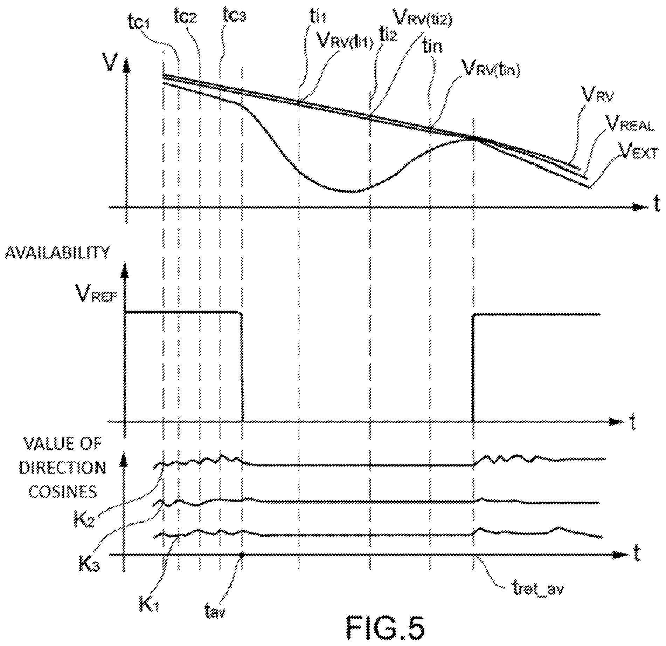

With reference to Fig. 5, an availability instant $t_{av}$ may be defined as the last instant in which the independent longitudinal reference speed $v_{ref}$ is available. The instant following the availability instant $t_{av}$ will be an instant in which the independent longitudinal reference speed $v_{ref}$ will no longer be available.

The independent longitudinal reference speed $v_{ref}(t_{av})$, detected at the instant $t_{av}$, is the last available reliable value of the independent longitudinal reference speed $v_{ref}$.

A return to availability instant $t_{ret\_av}$, where $t_{ret\_av} > t_{av}$, may also be defined as the first instant in which the independent longitudinal reference speed $v_{ef}$ becomes available again.

The measurement instant $t_{i1}$ may coincide with the return to availability instant $t_{ret\_av}$.

The equation

$$k_1 * a_x(t) + k_2 * a_y(t) + k_3 * a_z(t) = a_{ref}(t)$$

is applicable only in the periods of availability of the independent longitudinal reference speed $v_{ref}$, i.e. in the periods (t <tav) and (t>tret_av).

By solving this equation, the coefficients $k_1$, $k_2$, $k_3$ will be dynamically updated up to the availability instant $t_{av}$. In the time period between $t_{av}$ and $t_{ret\_av}$, the values of $k_1$, $k_2$, $k_3$ will be frozen at their last value updated at the availability instant $t_{av}$, $k_1(t_{av})$, $k_2(t_{av})$, $k_3(t_{av})$). Then, with $t > t_{av}$, the values of $k_1$, $k_2$, $k_3$ may be dynamically updated by solving equation (7).

For example, the first measurement instant $t_{i1}$ may coincide with an instant in which said independent longitudinal reference speed $v_{ref}(t_{ret\_av})$ becomes available again after being unavailable.

The adaptive filter may be arranged to determine the respective updated values of the first direction cosine ki, the second direction cosine $k_2$ and the third direction cosine $k_3$ through an adaptive algorithm based on a least means square technique, LMS.

For all of the embodiments described above, the calibration phase may be repeated for a plurality of calibration instants, for example a second calibration instant $t_{i2}$, a third calibration instant $t_{i3}$, ..., an n-th calibration instant $t_{in}$.

Clearly, the calibration step may be performed at each first ignition of the at least one railway vehicle.

In the following, some examples of the independent longitudinal reference speed $v_{ref}$ of the railway vehicle will be given.

For example, the independent longitudinal reference speed $v_{ef}$ may be a longitudinal speed obtained from an angular speed of an axle of the railway vehicle. In this case, the independent longitudinal reference speed $v_{ef}$ may be available when the axle is not slipping.

In a further example, the independent longitudinal reference speed $v_{ef}$ of the railway vehicle is a longitudinal speed of the railway vehicle provided by a positioning means. In this case, the independent longitudinal reference speed $v_{ef}$ may be available when said positioning means communicates with a satellite. The positioning means may be a GPS system/device which communicates using a suitable signal to obtain the location information and therefore the speed of movement of the train. The independent longitudinal reference speed $v_{ef}$ may not be available when, for example, the railway vehicle is inside a tunnel and is not able to communicate with said satellite.

In a further aspect of the invention, the estimated longitudinal acceleration $a_{lon}$ may be determined for a plurality of measurement times $t_{i1}$, $t_{i2}$, ..., $t_{in}$ in which the independent longitudinal reference speed $v_{ref}$ of the railway vehicle is available, for example a second measurement instant $t_{i2}$, a third measurement instant $t_{i3}$, ..., an n-th measurement instant $t_{in}$. The plurality of measurement times $t_{i1}$, $t_{i2}$, ..., $t_{in}$ may be selected according to an acquisition period $\Delta T_i$.

Or, the estimated longitudinal acceleration $a_{lon}$ may be continuously determined from an availability instant $t_{av}$ coinciding with an instant that directly precedes an unavailability instant in which said independent longitudinal reference speed $v_{ref}$ of the railway vehicle is no longer available, and a measurement instant, for example the first measurement instant $t_{i1}$ or the successive measurement instants $t_{i2}$, ..., $t_{in}$.

This invention also relates to a method for estimating a longitudinal speed of at least one railway vehicle.

When the estimated longitudinal acceleration $a_{lon}$ is determined for a plurality of measurement times $t_{i1}$, $t_{i2}$, ..., $t_{in}$ in which the independent longitudinal reference speed $v_{ref}$ of the rail vehicle is available, which measurement times were selected according to an acquisition period $\Delta T_i$, the method for estimating a longitudinal speed of at least one railway vehicle comprises the step of measuring the value of the independent longitudinal reference speed $v_{ref}(t_{av})$ of the at least one axle of the railway vehicle in the availability instant $t_{av}$.

The method for estimating a longitudinal speed of at least one railway vehicle also comprises the step of determining the longitudinal speed $v_{RV}(t_{in})$ of the railway vehicle according to the following steps:

- calculating the sum of the longitudinal accelerations estimated in the plurality of measurement times $t_{i1}$, $t_{i2}$, ..., $t_{in}$;
- multiplying the sum of the longitudinal accelerations determined in the plurality of measurement times $t_{i1}$, $t_{i2}$, ..., $t_{in}$ by the acquisition period $\Delta T_i$;
- adding the value of the independent longitudinal reference speed $V_{ref}(t_{av})$ of said at least one railway vehicle in the availability instant $t_{av}$ to the result of the multiplication of the sum of the estimated longitudinal accelerations determined in the plurality of measurement times $t_{i1}$, $t_{i2}$, ..., $t_{in}$ by the acquisition period $\Delta T_i$.

For example, the step of determining the longitudinal speed $v_{RV}$ of the railway vehicle may be carried out using the following formula:

$$v_{RV}(t_{in}) = v_{ref}(t_{av}) + \sum_0^n a_{lon} * \Delta T_i$$

where:

- $v_{ref}(t_{av})$ is the independent longitudinal reference speed $V_{ref}(t_{av})$ of said at least one railway vehicle in the availability instant $t_{av}$;
- $\sum_0^n a_{lon}$ is the sum of the longitudinal accelerations estimated in the plurality of measurement instants $t_{i1}$, $t_{i2}$, ..., $t_{in}$ and $n$ is the number of acquisition periods elapsed between the availability instant $t_{av}$ and the measurement

instant ($t_{in}$) of which the longitudinal speed $v_{RV}(t_{in})$ is under determination; and

- $\Delta T_i$ is the acquisition period.

When instead the estimated longitudinal acceleration $a_{lon}$ is determined continuously from the availability instant $t_{av}$, coinciding with an instant directly preceding an unavailability instant in which said independent longitudinal reference speed $v_{ref}$ is not available, and for example a first measurement instant $t_{i1}$, the method for estimating a longitudinal speed of at least one railway vehicle comprises the step of measuring the value of the independent longitudinal reference speed $v_{ref}(t_{av})$ of said at least one railway vehicle in the availability instant $t_{av}$.

The method for estimating a longitudinal speed of at least one railway vehicle also comprises the step of determining the longitudinal speed $v_{RV}(t)$ of the railway vehicle according to the following steps:

- calculating the integral of the estimated longitudinal acceleration $a_{lon}$ determined continuously from the availability instant $t_{av}$ to said first measurement instant $t_{i1}$;
- adding the value of the independent longitudinal reference speed $V_{ref}(t_{av})$ of said at least one railway vehicle in the availability instant $t_{av}$ to the result of the integral of the estimated longitudinal acceleration.

For example, the step of determining the longitudinal speed $v_{RV}(t_{i1})$ of the railway vehicle may be carried out using the following formula:

$$v_{RV}(t_{i1}) = v_{ref}(t_{av}) + \int_{t_{av}}^{t_{i1}} a_{lon}\ dt$$

where:

- $v_{ref}(t_{av})$ is the independent longitudinal reference speed $V_{ref}(t_{av})$ in the availability instant $t_{av}$;
- $\int_{t_{av}}^{t_{i1}} a_{lon}\ dt$ is the integral of the estimated longitudinal acceleration $a_{lon}$ determined continuously from the availability instant $t_{av}$ to the first measurement instant $t_{i1}$ of which the longitudinal speed $v_{RV}(t_{i1})$ is under determination.

The above is also valid for the subsequent measurement instants. For example, considering an n-th measurement time $t_{in}$, the step of determining the longitudinal speed $v_{RV}(t_{in})$ of the railway vehicle may be carried out using the following formula:

$$v_{RV}(t_{in}) = v_{ref}(t_{av}) + \int_{t_{av}}^{t_{in}} a_{lon}\ dt$$

where:

- $v_{ref}(t_{av})$ is the independent longitudinal reference speed $V_{ref}(t_{av})$ in the availability instant $t_{av}$;
- $\int_{t_{av}}^{t_{in}} a_{lon}\ dt$ is the integral of the estimated longitudinal acceleration $a_{lon}$ determined continuously from the availability instant $t_{av}$ to the n-th measurement instant $t_{in}$ of which the longitudinal speed $v_{RV}(t_{in})$ is under determination.

Again with reference to Fig. 5, it may therefore be summarized that, during the time period between $t_{av}$ and $t_{ret\_av}$, with the independent longitudinal reference speed $v_{ref}$ not being available, the acceleration of the railway vehicle will be calculated from the measurements of the accelerometer.

During the time period between $t_{av}$ and $t_{ret\_av}$, with the independent longitudinal reference speed $v_{ref}$ not being available, the speed of the railway vehicle will be calculated using the measurements from the accelerometer and the last reliable independent longitudinal reference speed value $v_{ref}$ according to the equations shown above.

Advantageously, because of that which has been described above in the present description, the longitudinal speed of the railway vehicle $v_{RV}$ will always be available, even in the phases in which the independent longitudinal reference speed $v_{ref}$ is not available. Because of this, it is also possible to fully recover the use of the idle axle for traction and braking purposes, even in the case of particularly low adhesion, thus increasing the traction and braking capacity of the train.

Various aspects and embodiments of a method for estimating a longitudinal acceleration of at least one railway vehicle and a method for estimating a longitudinal speed of at least one railway vehicle according to the invention have been described. It is understood that each embodiment may be combined with any other embodiment. Furthermore, the invention is not limited to the described embodiments, but may be varied within the scope defined by the appended claims.

**Claims**

1. Method for estimating a longitudinal acceleration of at least one railway vehicle by means of an accelerometric sensor means (100) arranged to measure a first acceleration $a_x$ along a first axis x, a second acceleration $a_y$ along a second axis y and a third acceleration $a_z$ along a third axis z, wherein the first axis x, the second axis y and the third axis z are orthogonal to each other;
the method for estimating a longitudinal acceleration of at least one railway vehicle is **characterized by** the fact that it comprises the steps of:

   - executing a calibration phase including the steps of:

      • measuring, in a first calibration instant $t_{c1}$ in which an independent longitudinal reference speed $v_{ref}$ of the railway vehicle is available, a first value of the first acceleration $a_x(t_{ci1}$, a first value of the second acceleration $a_y(t_{c1})$ and a first value of the third acceleration $a_z(t_{c1})$; the measurement of the independent longitudinal reference speed $v_{ref}$ being independent from said accelerometric sensor means (100);
      • measuring, in a second calibration instant $t_{c2}$ in which said independent longitudinal reference speed $v_{ref}$ of the railway vehicle is available, which second calibration instant is different from said first calibration instant $t_{c1}$, a second value of the first acceleration $a_x(t_{c2})$, a second value of the second acceleration $a_y(t_{c2})$ and a second value of the third acceleration $a_z(t_{c2})$;
      • measuring, in a third calibration instant $t_{c3}$ in which said independent longitudinal reference speed $v_{ref}$ of the railway vehicle is available, which third calibration instant is different from said first calibration instant $t_{c1}$ and from said second calibration instant $t_{c2}$, a third value of the first acceleration $a_x(t_{c3})$, a third value of the second acceleration $a_y(t_{c3})$ and a third value of the third acceleration $a_z(t_{c3})$;
      • calculating the value of a first independent longitudinal reference acceleration $a_{ref}(t_{c1})$ in the first calibration instant $t_{c1}$ from a first value of the independent longitudinal reference speed $v_{ref}(t_{c1})$ measured in the first calibration instant $t_{c1}$;
      • calculating the value of a second independent longitudinal reference acceleration $a_{ref}(t_{c2})$ in the second calibration instant $t_{c2}$ from a second value of the effective independent longitudinal reference speed $v_{ref}(t_{c2})$ measured in the second calibration instant $t_{c2}$;
      • calculating the value of a third independent longitudinal reference acceleration $a_{ref}(t_{c3})$ in the third calibration instant $t_{c3}$ from a third value of the independent longitudinal reference speed $v_{ref}(t_{c3})$ measured in the third calibration instant $t_{c3}$;
      • solving the following system, in order to determine the values of a first direction cosine $k_1$, a second direction cosine $k_2$ and a third direction cosine $k_3$:

$$\begin{cases} k_1 * a_x(t_{c1}) + k_2 * a_y(t_{c1}) + k_3 * a_z(t_{c1}) = a_{ref}(t_{c1}) \\ k_1 * a_x(t_{c2}) + k_2 * a_y(t_{c2}) + k_3 * a_z(t_{c2}) = a_{ref}(t_{c2}) \\ k_1 * a_x(t_{c3}) + k_2 * a_y(t_{c3}) + k_3 * a_z(t_{c3}) = a_{ref}(t_{c3}) \end{cases}$$

   - following the calibration phase, determining, for at least a first measurement instant $t_{i1}$ in which said independent longitudinal reference speed of the railway vehicle is not available, an estimated longitudinal acceleration value $a_{lon}(t_{i1})$ of the at least one railway vehicle, wherein said estimated longitudinal acceleration value $a_{lon}(t_{i1})$ is relative to said first measurement instant $t_{i1}$ and is estimated by means of the sum of:

      • a multiplication of the first direction cosine ki, determined during the calibration phase, with a fourth value of the first acceleration $a_x(t_{i1})$ acquired in said first measurement instant $t_{i1}$;
      • a multiplication of the second direction cosine $k_2$, determined during the calibration phase, with a fourth value of the second acceleration $a_y(t_{i1})$ acquired in said first measurement instant $t_{i1}$;
• a multiplication of the third direction cosine $k_3$, determined during the calibration phase, with a fourth value of the third acceleration $a_z(t_{i1})$ acquired in said first measurement instant $t_{i1}$.

2. Method for estimating a longitudinal acceleration of at least one railway vehicle by means of an accelerometric sensor means (100) arranged to measure a first acceleration $a_x$ along a first axis x, a second acceleration $a_y$ along a second axis y and a third acceleration $a_z$ along a third axis z, wherein the first axis x, the second axis y and the third axis z are orthogonal to each other;
the method for estimating a longitudinal acceleration of at least one railway vehicle is **characterized by** the fact that it comprises the steps of:

- executing a calibration phase including the steps of:

• for at least a first calibration instant $t_{c1}$ in which an independent longitudinal reference speed $v_{ref}$ of the railway vehicle is available, wherein the measurement of the independent longitudinal reference speed $v_{ref}$ is independent from said accelerometric sensor means (100), estimating an estimated longitudinal acceleration value $a_{lon}(t_{c1})$ of the at least one railway vehicle by means of a linear filter; wherein said estimated longitudinal acceleration value $a_{lon}(t_{c1})$ is relative to said first calibration instant $t_{c1}$ and is estimated by the linear filter by means of the sum of:

o a multiplication of a first direction cosine ki having a predetermined value with a first value of the first acceleration $a_x(t_{c1})$ acquired in said first calibration instant $t_{c1}$;
o a multiplication of a second direction cosine $k_2$ having a predetermined value with a first value of the second acceleration $a_y(t_{c1})$ acquired in said first calibration instant $t_{c1}$;
o a multiplication of a third direction cosine $k_3$ having a predetermined value with a first value of the third acceleration $a_z(t_{c1})$ acquired in said first calibration instant $t_{c1}$;
• determining an estimate error (Error) by means of the difference between the estimated longitudinal acceleration value $a_{lon}(t_{c1})$, relative to said first calibration instant $t_{c1}$, and a reference longitudinal acceleration value $a_{ref}(t_{c1})$ which is relative to the first calibration instant $t_{c1}$ and determined from a first value of the independent reference longitudinal speed value $v_{ref}(t_{c1})$ measured in the first calibration instant $t_{c1}$;
• determining, by means of an adaptive filter (104), respective updated values of the first direction cosine $k_1$, the second direction cosine $k_2$ and the third direction cosine $k_3$ to be imposed onto said linear filter in order to minimize said estimate error;

- following the calibration phase, determining by means of said linear filter, for at least a first measurement instant $t_{i1}$ in which said independent longitudinal reference speed of the railway vehicle is not available, an estimated longitudinal acceleration value $a_{lon}(t_{i1})$ of the at least one railway vehicle, wherein said estimated longitudinal acceleration value $a_{lon}(t_{i1})$ is relative to said first measurement instant $t_{i1}$ and is estimated by means of the sum of:

• a multiplication of the updated value of said first direction cosine ki, determined during the calibration phase, with a second value of the first acceleration $a_x(t_{i1})$ acquired in said first measurement instant $t_{i1}$;
• a multiplication of the updated value of said second direction cosine $k_2$, determined during the calibration phase, with a second value of the second acceleration $a_y(t_{i1})$ acquired in said first measurement instant $t_{i1}$;
• a multiplication of the updated value of said third direction cosine $k_3$, determined during the calibration phase, with a second value of the third acceleration $a_z(t_{i1})$ acquired in said first measurement instant $t_{i1}$.

3. Method for estimating a longitudinal acceleration of at least one railway vehicle according to claim 2, wherein said adaptive filter is arranged to determine said respective updated values of the first direction cosine ki, the second direction cosine $k_2$ and the third direction cosine $k_3$ through an adaptive algorithm based on a least means square technique, LMS.

4. Method for estimating a longitudinal acceleration of at least one railway vehicle according to any of the preceding claims, wherein the calibration phase is repeated for a plurality of calibration instants.

5. Method for estimating a longitudinal acceleration of at least one railway vehicle according to any of the preceding claims, wherein the calibration phase is performed at each first ignition of the at least one railway vehicle.

**6.** Method for estimating a longitudinal acceleration of at least one railway vehicle according to any of the preceding claims, wherein said independent longitudinal reference speed $v_{ref}$ of the railway vehicle is a longitudinal speed determined from an angular speed of an axle of the railway vehicle;
said independent longitudinal reference speed $v_{ef}$ being available when said axle is not slipping.

**7.** Method for estimating a longitudinal acceleration of at least one railway vehicle according to any of claims 1 to 6, wherein said independent longitudinal reference speed $v_{ef}$ of the railway vehicle is a longitudinal speed of the railway vehicle provided by a positioning means;
said independent longitudinal reference speed $v_{ef}$ being available when said positioning means communicates with a satellite.

**8.** Method for estimating a longitudinal acceleration of at least one railway vehicle according to any of the preceding claims, wherein the estimated longitudinal acceleration $a_{lon}$ is determined for a plurality of measurement instants $(t_{i1}, t_{i2}, ..., t_{in})$ in which said independent longitudinal reference speed $v_{ref}$ of the railway vehicle is available; the plurality of measurement instants $(t_{i1}, t_{i2}, ..., t_{in})$ being selected according to an acquisition period $\Delta Ti$.

**9.** Method for estimating a longitudinal acceleration of at least one railway vehicle according to any of claims 1 to 7, wherein the estimated longitudinal acceleration $a_{lon}$ is continuously determined from an availability instant $t_{av}$ coinciding with an instant that directly precedes an unavailability instant in which said independent longitudinal reference speed $v_{ref}$ of the railway vehicle is no longer available, and said first measurement instant $t_{i1}$.

**10.** Method for estimating a longitudinal speed of at least one railway vehicle comprising the steps of:

- executing a method for estimating a longitudinal acceleration of at least one railway vehicle according to claim 8;
- measuring the value of the independent longitudinal reference speed $V_{ref}(t_{av})$ of said at least one railway vehicle in an availability instant $t_{av}$ coinciding with an instant that directly precedes an unavailability instant in which said independent longitudinal reference speed $v_{ref}$ of the railway vehicle is no longer available;

- determining the longitudinal speed $v_{RV}$ of the railway vehicle according to the following steps:

• calculating the sum of the longitudinal accelerations estimated in the plurality of measurement instants $(t_{i1}, t_{i2}, ..., tin)$;
• multiplying the sum of the longitudinal accelerations determined in the plurality of measurement instants $(t_{i1}, t_{i2}, ..., t_{in})$ by the acquisition period $\Delta T_i$;
• adding the value of the independent longitudinal reference speed $V_{ref}(t_{av})$ of said at least one railway vehicle in the availability instant $t_{av}$ to the result of the multiplication of the sum of the estimated longitudinal accelerations determined in the plurality of measurement instants $(t_{i1}, t_{i2}, ..., t_{in})$ by the acquisition period $\Delta T$;.

**11.** Method for estimating a longitudinal speed of at least one railway vehicle according to claim 10, wherein the step of determining the longitudinal speed $v_{RV}(t_{in})$ of the railway vehicle is carried out by the following formula:

$$v_{RV}(t_{in}) = v_{ref}(t_{av}) + \sum_0^n a_{lon} * \Delta T_i$$

where:

- $v_{ref}(t_{av})$ is the independent longitudinal reference speed $V_{ref}(t_{av})$ of said at least one railway vehicle in the availability instant $t_{av}$;

- $\sum_0^n a_{lon}$ is the sum of the longitudinal accelerations determined in the plurality of measurement instants $t_{i1}$, $t_{i2}$, ..., $t_{in}$ and n is the number of acquisition periods elapsed between the availability instant $t_{av}$ and the measurement instant $(t_{in})$ of which the longitudinal speed $v_{RV}(t_{in})$ is under determination; and

- $\Delta T_i$ is the acquisition period.

**12.** Method for estimating a longitudinal speed of at least one railway vehicle comprising the steps of:

- executing a method for estimating a longitudinal acceleration of at least one railway vehicle according to claim 9;
- measuring the value of the independent longitudinal reference speed $V_{ref}(t_{av})$ of said at least one railway vehicle in the availability instant $t_{av}$;
- determining the longitudinal speed $v_{RV}(t_{i1})$ of the railway vehicle according to the following steps:

  • calculating the integral of the estimated longitudinal acceleration $a_{lon}$ determined continuously from the availability instant $t_{av}$ to said first measurement instant $t_{i1}$;
  • adding the value of the independent longitudinal reference speed $V_{ref}(t_{av})$ of said at least one railway vehicle in the availability instant $t_{av}$ to the result of the integral of the estimated longitudinal acceleration.

13. Method for estimating a longitudinal speed of at least one railway vehicle according to claim 12, wherein the step of determining the longitudinal speed $v_{RV}(t_{i1})$ of the railway vehicle is carried out by the following formula:

$$v_{RV}(t_{i1}) = v_{ref}(t_{av}) + \int_{t_{av}}^{t_{i1}} a_{lon}\ dt$$

where:

- $v_{ref}(t_{av})$ is the independent longitudinal reference speed $V_{ref}(t_{av})$ in the availability instant $t_{av}$,

- $\int_{t_{av}}^{t_{i1}} a_{lon}\ (t)\ dt$ is the integral of the estimated longitudinal acceleration $a_{lon}$ determined continuously from the availability instant $t_{av}$ to the first measurement instant $t_{i1}$ of which the longitudinal speed $v_{RV}(t)$ is under determination.

14. Method for estimating a longitudinal speed of at least one railway vehicle according to any of claims 10 to 13, wherein the first measurement instant $t_{i1}$ coincides with a return to availability instant $t_{ret\_av}$ in which said independent longitudinal references speed $V_{ref}$ becomes available again after being unavailable.


**Patentansprüche**

1. Verfahren zum Schätzen einer längs gerichteten Beschleunigung von mindestens einem Schienenfahrzeug mittels eines Beschleunigungssensormittels (100), das angeordnet ist zum Messen einer ersten Beschleunigung $a_x$ entlang einer ersten Achse x, einer zweiten Beschleunigung $a_y$ entlang einer zweiten Achse y und einer dritten Beschleunigung $a_z$ entlang einer dritten Achse z, wobei die erste Achse x, die zweite Achse y und die dritte Achse z senkrecht zueinander sind;
das Verfahren zum Schätzen einer längs gerichteten Beschleunigung des mindestens einen Schienenfahrzeugs ist **dadurch gekennzeichnet, dass** es die Schritte aufweist:

- Ausführen einer Kalibrierungsphase mit den Schritten:

  • Messen, in einem ersten Kalibrierungsmoment $t_{c1}$, bei dem eine unabhängige längs gerichtete Referenzgeschwindigkeit $v_{ref}$ des Schienenfahrzeugs verfügbar ist, eines ersten Werts der ersten Beschleunigung $a_x(t_{c1})$, eines ersten Werts der zweiten Beschleunigung $a_y(t_{c1})$ und eines ersten Werts der dritten Beschleunigung $a_z(t_{c1})$; wobei die Messung der unabhängigen längs gerichteten Referenzgeschwindigkeit $v_{ref}$ unabhängig von dem Beschleunigungssensormittel (100) ist;
  • Messen, in einem zweiten Kalibrierungsmoment $t_{c2}$, bei dem die unabhängige längs gerichtete Referenzgeschwindigkeit $v_{ref}$ des Schienenfahrzeugs verfügbar ist, wobei der zweite Kalibrierungsmoment von dem ersten Kalibrierungsmoment $t_{c1}$ verschieden ist, eines zweiten Werts der ersten Beschleunigung $a_x(t_{c2})$, eines zweiten Werts der zweiten Beschleunigung $a_y(t_{c2})$ und eines zweiten Werts der dritten Beschleunigung $a_z(t_{c2})$;
  • Messen, in einem dritten Kalibrierungsmoment $t_{c3}$, bei dem die unabhängige längs gerichtete Referenzgeschwindigkeit $v_{ref}$ des Schienenfahrzeugs verfügbar ist, wobei der dritte Kalibrierungsmoment von dem ersten Kalibrierungsmoment $t_{c1}$ und von dem zweiten Kalibrierungsmoment $t_{c2}$ verschieden ist, eines dritten Werts der ersten Beschleunigung $a_x(t_{c3})$, eines dritten Werts der zweiten Beschleunigung $a_y(t_{c3})$ und eines dritten Werts der dritten Beschleunigung $a_z(t_{c3})$;

• Berechnen des Werts einer ersten unabhängigen längs gerichtete Referenzbeschleunigung $a_{ref}(t_{c1})$ bei dem ersten Kalibrierungsmoment $t_{c1}$ aus einem ersten Wert der unabhängigen längs gerichtete Referenzgeschwindigkeit $v_{ref}(t_{c1})$, der bei dem ersten Kalibrierungsmoment $t_{c1}$ gemessen wird;

• Berechnen des Werts einer zweiten unabhängigen längs gerichtete Referenzbeschleunigung $a_{ref}(t_{c2})$ bei dem zweiten Kalibrierungsmoment $t_{c2}$ aus einem zweiten Wert der effektiven unabhängigen längs gerichteten Referenzgeschwindigkeit $v_{ref}(t_{c2})$, der bei dem zweiten Kalibrierungsmoment $t_{c2}$ gemessen wird;

• Berechnen des Werts einer dritten unabhängigen längs gerichtete Referenzbeschleunigung $a_{ref}(t_{c3})$ bei dem dritten Kalibrierungsmoment $t_{c3}$ aus einem dritten Wert der unabhängigen längs gerichtete Referenzgeschwindigkeit $v_{ref}(t_{c3})$, der bei dem dritten Kalibrierungsmoment $t_{c3}$ gemessen wird;

• Lösen des folgenden Systems, um die Werte eines ersten Richtungskosinus $k_1$, eines zweiten Richtungskosinus $k_2$ und eines dritten Richtungskosinus $k_3$ zu bestimmen:

$$\begin{cases} k_1 * a_x(t_{c1}) + k_2 * a_y(t_{c1}) + k_3 * a_z(t_{c1}) = a_{ref}(t_{c1}) \\ k_1 * a_x(t_{c2}) + k_2 * a_y(t_{c2}) + k_3 * a_z(t_{c2}) = a_{ref}(t_{c2}) \\ k_1 * a_x(t_{c3}) + k_2 * a_y(t_{c3}) + k_3 * a_z(t_{c3}) = a_{ref}(t_{c3}) \end{cases}$$

- nach der Kalibrierungsphase, für mindestens einen ersten Messmoment $t_{i1}$, bei dem die unabhängige längs gerichtete Referenzgeschwindigkeit des Schienenfahrzeugs nicht verfügbar ist, Bestimmen eines geschätzten längs gerichteten Beschleunigungswerts $a_{lon}(t_{i1})$ des mindestens einen Schienenfahrzeugs, wobei der geschätzte längs gerichtete Beschleunigungswert $a_{-lon}(t_{i1})$ relativ zu dem ersten Messmoment $t_{i1}$ ist und geschätzt wird mittels der Summe aus:

• einer Multiplikation des ersten Richtungskosinus $k_1$, der während der Kalibrierungsphase bestimmt wird, mit einem vierten Wert der ersten Beschleunigung $a_x(t_{i1})$, der bei dem ersten Messmoment $t_{i1}$ erfasst wird;
• einer Multiplikation des zweiten Richtungskosinus $k_2$, der während der Kalibrierungsphase bestimmt wird, mit einem vierten Wert der zweiten Beschleunigung $a_y(t_{i1})$, der bei dem ersten Messmoment $t_{i1}$ erfasst wird;
• einer Multiplikation des dritten Richtungskosinus $k_3$, der während der Kalibrierungsphase bestimmt wird, mit einem vierten Wert der dritten Beschleunigung $a_z(t_{i1})$, der bei dem ersten Messmoment $t_{i1}$ erfasst wird.

**2.** Verfahren zum Schätzen einer längs gerichteten Beschleunigung von mindestens einem Schienenfahrzeug durch ein Beschleunigungssensormittel (100), das angeordnet ist zum Messen einer ersten Beschleunigung $a_x$ entlang einer ersten Achse x, einer zweiten Beschleunigung $a_y$ entlang einer zweiten Achse y und einer dritten Beschleunigung $a_z$ entlang einer dritten Achse z, wobei die erste Achse x, die zweite Achse y und die dritte Achse z senkrecht zueinander sind;

das Verfahren zum Schätzen einer längs gerichtete Beschleunigung des mindestens einen Schienenfahrzeugs ist **dadurch gekennzeichnet, dass** es die Schritte aufweist:

- Durchführen einer Kalibrierungsphase mit den Schritten:

• bei mindestens einem ersten Kalibrierungsmoment $t_{c1}$, bei dem eine unabhängige längs gerichtete Referenzgeschwindigkeit $v_{ref}$ des Schienenfahrzeugs verfügbar ist, wobei die Messung der unabhängigen längs gerichtete Referenzgeschwindigkeit $v_{ref}$ unabhängig von dem Beschleunigungssensormittel (100) ist, Schätzen eines geschätzten längs gerichtete Beschleunigungswerts $a_{lon}(t_{c1})$ des mindestens einen Schienenfahrzeugs durch ein lineares Filter; wobei der geschätzte längs gerichtete Beschleunigungswert $a_{lon}(t_{c1})$ relativ zu dem ersten Kalibrierungsmoment $t_{c1}$ ist und durch das lineare Filter geschätzt wird durch die Summe aus:

o einer Multiplikation eines ersten Richtungskosinus $k_1$, der einen vorbestimmten Wert hat, mit einem ersten Wert der ersten Beschleunigung $a_x(t_{ci1}$, der bei dem ersten Kalibrierungsmoment $t_{c1}$ erfasst wird;
o einer Multiplikation eines zweiten Richtungskosinus $k_2$, der einen vorbestimmten Wert hat, mit einem ersten Wert der zweiten Beschleunigung $a_y(t_{c1})$, der bei dem ersten Kalibrierungsmoment $t_{c1}$ erfasst wird;
o einer Multiplikation eines dritten Richtungskosinus $k_3$, der einen vorbestimmten Wert hat, mit einem ersten Wert der dritten Beschleunigung $a_z(t_{c1})$, der bei dem ersten Kalibrierungsmoment $t_{c1}$ erfasst wird;

• Bestimmen eines Schätzfehlers (Fehler) mittels der Differenz zwischen dem geschätzten längs gerichtete Beschleunigungswert $a_{lon}(t_{c1})$ relativ zu dem ersten Kalibrierungsmoment $t_{c1}$, und einem längs gerichtetem Referenzbeschleunigungswert $a_{ref}(t_{c1})$, der relativ zu dem ersten Kalibrierungsmoment $t_{c1}$ ist und bestimmt wird aus einem ersten Wert des unabhängigen Referenzlängsgeschwindigkeitswerts $v_{ref}(t_{c1})$, der bei dem ersten Kalibrierungsmoment $t_{c1}$ gemessen wird;

• Bestimmen, durch ein adaptives Filter (104), jeweiliger aktualisierter Werte des ersten Richtungskosinus $k_1$, des zweiten Richtungskosinus $k_2$ und des dritten Richtungskosinus $k_3$, die auf das lineare Filter angewendet werden, um den geschätzten Fehler zu minimieren;

- nach der Kalibrierungsphase, Bestimmen durch das lineare Filter für mindestens einen ersten Messmoment $t_{i1}$, bei dem die unabhängige längs gerichtete Referenzgeschwindigkeit des Schienenfahrzeugs nicht verfügbar ist, eines geschätzten längs gerichteten Beschleunigungswerts $a_{lon}(t_{i1})$ des mindestens einen Schienenfahrzeugs, wobei der geschätzte längs gerichtete Beschleunigungswert $a_{lon}(t_{i1})$ relativ zu dem ersten Messmoment $t_{i1}$ ist und bestimmt wird durch die Summe aus:

• einer Multiplikation des aktualisierten Werts des ersten Richtungskosinus $k_1$, der während der Kalibrierungsphase bestimmt wird, mit einem zweiten Wert der ersten Beschleunigung $a_x(t_{i1})$, der bei dem ersten Messmoment $t_{i1}$ erfasst wird;

• einer Multiplikation des aktualisierten Werts des zweiten Richtungskosinus $k_2$, der während der Kalibrierungsphase bestimmt wird, mit einem zweiten Wert der zweiten Beschleunigung $a_y(t_{i1})$, der bei dem ersten Messmoment $t_{i1}$ erfasst wird;

• einer Multiplikation des aktualisierten Werts des dritten Richtungskosinus $k_3$, der während der Kalibrierungsphase bestimmt wird, mit einem zweiten Wert der dritten Beschleunigung $a_z(t_{i1})$, der bei dem ersten Messmoment $t_{i1}$ erfasst wird.

3. Verfahren zum Schätzen einer längs gerichteten Beschleunigung des mindestens einen Schienenfahrzeugs nach Anspruch 2, bei dem das adaptive Filter angeordnet ist zum Bestimmen der jeweiligen aktualisierten Werte des ersten Richtungskosinus $k_1$, des zweiten Richtungskosinus $k_2$ und des dritten Richtungskosinus $k_3$ durch einen adaptiven Algorithmus basierend auf LMS (Least-Means-Square-Technik).

4. Verfahren zum Schätzen einer längs gerichteten Beschleunigung von mindestens einem Schienenfahrzeug nach einem der vorangegangenen Ansprüche, bei dem die Kalibrierungsphase für eine Mehrzahl von Kalibrierungsmomenten wiederholt wird.

5. Verfahren zum Schätzen einer längs gerichteten Beschleunigung von mindestens einem Schienenfahrzeug nach einem der vorangegangenen Ansprüche, bei dem die Kalibrierungsphase bei jeder ersten Zündung des mindestens einen Schienenfahrzeugs durchgeführt wird.

6. Verfahren zum Schätzen einer längs gerichteten Beschleunigung von mindestens einem Schienenfahrzeug nach einem der vorangegangenen Ansprüche, bei dem die unabhängige längs gerichtete Referenzgeschwindigkeit $v_{ref}$ des Schienenfahrzeugs eine Längsgeschwindigkeit ist, die aus einer Winkelgeschwindigkeit einer Welle des Schienenfahrzeugs bestimmt wird;

wobei die unabhängige längs gerichtete Referenzgeschwindigkeit $v_{ref}$ verfügbar ist, wenn die Welle keinen Schlupf aufweist.

7. Verfahren zum Schätzen einer längs gerichteten Beschleunigung von mindestens einem Schienenfahrzeug nach einem der Ansprüche 1 bis 6, bei dem die unabhängige längs gerichtete Referenzgeschwindigkeit $v_{ref}$ des Schienenfahrzeugs eine längs gerichtete Geschwindigkeit des Schienenfahrzeugs ist, die durch ein Positionsbestimmungsmittel bereitgestellt wird;

wobei die unabhängige längs gerichtete Referenzgeschwindigkeit $v_{ref}$ verfügbar ist, wenn das Positionsbestimmungsmittel mit einem Satelliten kommuniziert.

8. Verfahren zum Schätzen einer längs gerichteten Beschleunigung von mindestens einem Schienenfahrzeug nach einem der vorangegangenen Ansprüche, bei dem die geschätzte längs gerichtete Beschleunigung $a_{lon}$ für Mehrzahl von Messmomenten $(t_{i1}, t_{i2}, ..., t_{in})$ bestimmt wird, bei denen die unabhängige längs gerichtete Referenzgeschwindigkeit $v_{ref}$ des Schienenfahrzeugs verfügbar ist; wobei die Mehrzahl von Messmomenten $(t_{i1}, t_{i2}, ..., t_{in})$ gemäß einer Erfassungszeitperiode $\Delta Ti$ ausgewählt werden.

9. Verfahren zum Schätzen einer längs gerichteten Beschleunigung von mindestens einem Schienenfahrzeug nach einem der Ansprüche 1 bis 7, bei dem die geschätzte längs gerichtete Beschleunigung $a_{lon}$ kontinuierlich bestimmt wird aus einem Verfügbarkeitsmoment $t_{av}$, der mit einem Moment übereinstimmt, der direkt einem Nichtverfügbarkeitsmoment vorangeht, bei dem die unabhängige längs gerichtete Referenzgeschwindigkeit $v_{ref}$ des Schienenfahrzeugs nicht verfügbar ist, und dem ersten Messmoment $t_{i1}$.

10. Verfahren zum Schätzen einer längs gerichteten Geschwindigkeit von mindestens einem Schienenfahrzeug mit den Schritten:

    - Durchführen eines Verfahrens zum Schätzen einer längs gerichteten Beschleunigung von mindestens einem Schienenfahrzeug nach Anspruch 8;
    - Messen des Werts der unabhängigen längs gerichtete Referenzgeschwindigkeit $V_{ref}(t_{av})$ des mindestens einen Schienenfahrzeugs bei einem Verfügbarkeitsmoment $t_{av}$, der übereinstimmt mit einem Moment, der direkt einem Nichtverfügbarkeitsmoment vorangeht, bei dem die unabhängige längs gerichtete Referenzgeschwindigkeit $v_{ref}$ des Schienenfahrzeugs nicht länger verfügbar ist;

        - Bestimmen einer längs gerichtete Geschwindigkeit $v_{RV}$ des Schienenfahrzeugs gemäß den folgenden Schritten:

            • Berechnen der Summe der längs gerichteten Beschleunigungen, die bei der Mehrzahl von Messmomenten ($t_{i1}$, $t_{i2}$, ..., $t_{in}$) bestimmt werden;
            • Multiplizieren der Summe der längs gerichteten Beschleunigungen, die bei der Mehrzahl von Messmomenten ($t_{i1}$, $t_{i2}$, ..., $t_{in}$) bestimmt werden, mit der Erfassungszeitperiode $\Delta T_i$;
            • Addieren des Werts der unabhängigen längs gerichtete Referenzgeschwindigkeit $V_{ref}(t_{av})$ des mindestens einen Schienenfahrzeugs bei dem Verfügbarkeitsmoment $t_{av}$ mit dem Ergebnis der Multiplikation der Summe der geschätzten längs gerichtete Beschleunigungen, die bei der Mehrzahl von Messmomenten ($t_{i1}$, $t_{i2}$, ..., $t_{in}$) bestimmt werden, mit der Erfassungszeitperiode $\Delta T_i$.

11. Verfahren zum Schätzen einer längs gerichteten Geschwindigkeit von mindestens einem Schienenfahrzeug nach Anspruch 10, bei dem der Schritt des Bestimmens der längs gerichtete Geschwindigkeit $v_{RV}(t_{in})$ des Schienenfahrzeugs mit der folgenden Formel durchgeführt wird:

$$v_{RV}(t_{in}) = v_{ref}(t_{av}) + \sum_0^n a_{lon} * \Delta T_i \, ,$$

wobei:

    - $v_{ref}(t_{av})$ die unabhängige längs gerichtete Referenzgeschwindigkeit $V_{ref}(t_{av})$ des mindestens einen Schienenfahrzeugs bei dem Verfügbarkeitsmoment $t_{av}$ ist;
    - $\sum_0^n a_{lon}$ die Summe der längs gerichtete Beschleunigungen ist, die bei der Mehrzahl von Messmomenten $t_{i1}$, $t_{i2}$, ..., $t_{in}$ bestimmt werden, und n die Anzahl der Erfassungsperioden ist, die verstrichen sind zwischen dem Verfügbarkeitsmoment $t_{av}$ und dem Messmoment ($t_{in}$), bei dem die längs gerichtete Geschwindigkeit $v_{RV}(t_{in})$ bestimmt wird; und
    - $\Delta T_i$ die Erfassungszeitperiode ist.

12. Verfahren zum Schätzen einer Längsgeschwindigkeit von mindestens einem Schienenfahrzeug, mit den Schritten:

    - Durchführen eines Verfahrens zum Schätzen einer längs gerichteten Beschleunigung von mindestens einem Schienenfahrzeug gemäß Anspruch 9;
    - Messen des Werts der unabhängigen längs gerichtete Referenzgeschwindigkeit $V_{ref}(t_{av})$ des mindestens einen Schienenfahrzeugs bei dem Verfügbarkeitsmoment $t_{av}$;
    - Bestimmen der längs gerichtete Geschwindigkeit $v_{RV}(t_{i1})$ des Schienenfahrzeugs gemäß den folgenden Schritten:

        • Berechnen des Integrals der geschätzten längs gerichteten Beschleunigung $a_{lon}$, die kontinuierlich bestimmt wird von dem Verfügbarkeitsmoment $t_{av}$ bis zu dem ersten Messmoment $t_{i1}$;

• Addieren des Werts der unabhängigen längs gerichtete Referenzgeschwindigkeit $V_{ref}(t_{av})$ des ersten Schienenfahrzeugs bei dem Verfügbarkeitsmoment $t_{av}$ mit dem Ergebnis des Integrals der geschätzten längs gerichtete Beschleunigung.

13. Verfahren zum Schätzen einer längs gerichtete Geschwindigkeit von mindestens einem Schienenfahrzeug nach Anspruch 12, bei dem der Schritt des Bestimmens der längs gerichteten Geschwindigkeit $v_{RV}(t_{i1})$ des Schienenfahrzeugs mit der folgenden Formel durchgeführt wird:

$$v_{RV}(t_{i1}) = v_{ref}(t_{av}) + \int_{t_{av}}^{t_{i1}} a_{lon} \; dt \;,$$

wobei:

- $v_{ref}(t_{av})$ die unabhängige längs gerichtete Referenzgeschwindigkeit $V_{ref}(t_{av})$ bei dem Verfügbarkeitsmoment $t_{av}$ ist;

- $\int_{t_{av}}^{t_{i1}} a_{lon}\,(t)\;dt$ das Integral der geschätzten längs gerichteten Beschleunigung $a_{lon}$ ist, das kontinuierlich bestimmt wird von dem Verfügbarkeitsmoment $t_{av}$ bis zu dem ersten Messmoment $t_{i1}$, die längs gerichtete Geschwindigkeit $v_{RV}(t)$ bestimmt wird.

14. Verfahren zum Schätzen einer längs gerichtete Geschwindigkeit von mindestens einem Schienenfahrzeug nach einem der Ansprüche 10 bis 13, bei dem der erste Messmoment $t_{i1}$ übereinstimmt mit einer Rückkehr zu dem Verfügbarkeitsmoment $t_{ret\_av}$, bei dem die unabhängige längs gerichtete Referenzgeschwindigkeit $V_{ref}$ nach einer Nichtverfügbarkeit wieder verfügbar wird.

**Revendications**

1. Procédé d'estimation d'une accélération longitudinale d'au moins un véhicule ferroviaire au moyen d'un moyen de capteur accélérométrique (100) agencé pour mesurer une première accélération $a_x$ le long d'un premier axe x, une deuxième accélération $a_y$ le long d'un deuxième axe y et une troisième accélération $a_z$ le long d'un troisième axe z, dans lequel le premier axe x, le deuxième axe y et le troisième axe z sont orthogonaux les uns aux autres ;
le procédé d'estimation d'une accélération longitudinale d'au moins un véhicule ferroviaire est **caractérisé en ce qu'**il comprend les étapes suivantes :

- l'exécution d'une phase d'étalonnage comprenant les étapes suivantes :

• la mesure, à un premier instant d'étalonnage $t_{c1}$ auquel une vitesse de référence longitudinale indépendante $v_{ref}$ du véhicule ferroviaire est disponible, d'une première valeur de la première accélération $a_x(t_{c1})$, d'une première valeur de la deuxième accélération $a_y(t_{c1})$ et d'une première valeur de la troisième accélération $a_z(t_{c1})$ ; la mesure de la vitesse de référence longitudinale indépendante $v_{ref}$ étant indépendante dudit moyen de capteur accélérométrique (100) ;
• la mesure, à un deuxième instant d'étalonnage $t_{c2}$ auquel ladite vitesse de référence longitudinale indépendante $v_{ref}$ du véhicule ferroviaire est disponible, lequel deuxième instant d'étalonnage étant différent dudit premier instant d'étalonnage $t_{c1}$, d'une deuxième valeur de la première accélération $a_x(t_{c2})$, d'une deuxième valeur de la deuxième accélération $a_y(t_{c2})$ et d'une deuxième valeur de la troisième accélération $a_z(t_{c2})$ ;
• la mesure, à un troisième instant d'étalonnage $t_{c3}$ auquel ladite vitesse de référence longitudinale indépendante $v_{ref}$ du véhicule ferroviaire est disponible, lequel troisième instant d'étalonnage étant différent dudit premier instant d'étalonnage $t_{c1}$ et dudit deuxième instant d'étalonnage $t_{c2}$, d'une troisième valeur de la première accélération $a_x(t_{c3})$, d'une troisième valeur de la deuxième accélération $a_y(t_{c3})$ et d'une troisième valeur de la troisième accélération $a_z(t_{c3})$ ;
• le calcul de la valeur d'une première accélération de référence longitudinale indépendante $a_{ref}(t_{c1})$ au premier instant d'étalonnage $t_{c1}$ à partir d'une première valeur de la vitesse de référence longitudinale indépendante $v_{ref}(t_{c1})$ mesurée au premier instant d'étalonnage $t_{c1}$ ;

• le calcul de la valeur d'une deuxième accélération de référence longitudinale indépendante $a_{ref}(t_{c2})$ au deuxième instant d'étalonnage $t_{c2}$ à partir d'une deuxième valeur de la vitesse de référence longitudinale indépendante efficace $v_{ref}(t_{c2})$ mesurée au deuxième instant d'étalonnage $t_{c2}$ ;

• le calcul de la valeur d'une troisième accélération de référence longitudinale indépendante $a_{ref}(t_{c3})$ au troisième instant d'étalonnage $t_{c3}$ à partir d'une troisième valeur de la vitesse de référence longitudinale indépendante $v_{ref}(t_{c3})$ mesurée au troisième instant d'étalonnage $t_{c3}$ ;

• la résolution du système suivant, pour déterminer les valeurs d'un cosinus de première direction $k_1$, d'un cosinus de deuxième direction $k_2$ et d'un cosinus de troisième direction $k_3$ :

$$\begin{cases} k_1 * a_x(t_{c1}) + k_2 * a_y(t_{c1}) + k_3 * a_z(t_{c1}) = a_{ref}(t_{c1}) \\ k_1 * a_x(t_{c2}) + k_2 * a_y(t_{c2}) + k_3 * a_z(t_{c2}) = a_{ref}(t_{c2}) \\ k_1 * a_x(t_{c3}) + k_2 * a_y(t_{c3}) + k_3 * a_z(t_{c3}) = a_{ref}(t_{c3}) \end{cases}$$

- à la suite de la phase d'étalonnage, la détermination, pour au moins un premier instant de mesure $t_{i1}$ auquel ladite vitesse de référence longitudinale indépendante du véhicule ferroviaire n'est pas disponible, d'une valeur d'accélération longitudinale estimée $a_{lon}(t_{i1})$ de l'au moins un véhicule ferroviaire, dans lequel ladite valeur d'accélération longitudinale estimée $a_{lon}(t_{i1})$ est par rapport audit premier instant de mesure $t_{i1}$ et est estimée au moyen de la somme de :

• une multiplication du cosinus de première direction $k_1$, déterminé au cours de la phase d'étalonnage, par une quatrième valeur de la première accélération $a_x(t_{i1})$ acquise audit premier instant de mesure $t_{i1}$ ;

• une multiplication du cosinus de deuxième direction $k_2$, déterminé au cours de la phase d'étalonnage, par une quatrième valeur de la deuxième accélération $a_y(t_{i1})$ acquise audit premier instant de mesure $t_{i1}$ ;

• une multiplication du cosinus de troisième direction $k_3$, déterminé au cours de la phase d'étalonnage, par une quatrième valeur de la troisième accélération $a_z(t_{i1})$ acquise audit premier instant de mesure $t_{i1}$.

2. Procédé d'estimation d'une accélération longitudinale d'au moins un véhicule ferroviaire au moyen d'un moyen de capteur accélérométrique (100) agencé pour mesurer une première accélération $a_x$ le long d'un premier axe x, une deuxième accélération $a_y$ le long d'un deuxième axe y et une troisième accélération $a_z$ le long d'un troisième axe z, dans lequel le premier axe x, le deuxième axe y et le troisième axe z sont orthogonaux les uns aux autres ; le procédé d'estimation d'une accélération longitudinale d'au moins un véhicule ferroviaire est **caractérisé en ce qu'**il comprend les étapes suivantes :

- l'exécution d'une phase d'étalonnage comprenant les étapes suivantes :

• pour au moins un premier instant d'étalonnage $t_{c1}$ auquel une vitesse de référence longitudinale indépendante $v_{ref}$ du véhicule ferroviaire est disponible, dans lequel la mesure de la vitesse de référence longitudinale indépendante $v_{ref}$ est indépendante dudit moyen de capteur accélérométrique (100), l'estimation d'une valeur d'accélération longitudinale estimée $a_{lon}(t_{c1})$ de l'au moins un véhicule ferroviaire au moyen d'un filtre linéaire ; dans lequel ladite valeur d'accélération longitudinale estimée $a_{lon}(t_{c1})$ est par rapport audit premier instant d'étalonnage $t_{c1}$ et est estimée par le filtre linéaire au moyen de la somme de :

○ une multiplication d'un cosinus de première direction ki présentant une valeur prédéterminée par une première valeur de la première accélération $a_x(t_{c1})$ acquise audit premier instant d'étalonnage $t_{c1}$ ;

○ une multiplication d'un cosinus de deuxième direction $k_2$ présentant une valeur prédéterminée par une première valeur de la deuxième accélération $a_y(t_{c1})$ acquise audit premier instant d'étalonnage $t_{c1}$ ;

○ une multiplication d'un cosinus de troisième direction $k_3$ présentant une valeur prédéterminée par une première valeur de la troisième accélération $a_z(t_{c1})$ acquise audit premier instant d'étalonnage $t_{c1}$ ;

• la détermination d'une erreur d'estimation (Error) au moyen de la différence entre la valeur d'accélération longitudinale estimée $a_{lon}(t_{c1})$, par rapport audit premier instant d'étalonnage $t_{c1}$, et d'une valeur d'accélération longitudinale de référence $a_{ref}(t_{c1})$ qui est par rapport au premier instant d'étalonnage $t_{c1}$ et déterminée à partir d'une première valeur de la valeur de vitesse longitudinale de référence indépendante $v_{ref}(t_{c1})$ mesurée au premier instant d'étalonnage $t_{c1}$ ;

• la détermination, au moyen d'un filtre adaptatif (104), de valeurs mises à jour respectives du cosinus de première direction ki, du cosinus de deuxième direction $k_2$ et du cosinus de troisième direction $k_3$ à imposer audit filtre linéaire pour minimiser ladite erreur d'estimation ;

- à la suite de la phase d'étalonnage, la détermination, au moyen dudit filtre linéaire, pour au moins un premier instant de mesure $t_{i1}$ auquel ladite vitesse de référence longitudinale indépendante du véhicule ferroviaire n'est pas disponible, d'une valeur d'accélération longitudinale estimée $a_{lon}(t_{i1})$ de l'au moins un véhicule ferroviaire, dans lequel ladite valeur d'accélération longitudinale estimée $a_{lon}(t_{i1})$ est par rapport audit premier instant de mesure $t_{i1}$ et est estimée au moyen de la somme de :

> • une multiplication de la valeur mise à jour dudit cosinus de première direction $k_1$, déterminé au cours de la phase d'étalonnage, par une deuxième valeur de la première accélération $a_x(t_{i1})$ acquise audit premier instant de mesure $t_{i1}$ ;
> • une multiplication de la valeur mise à jour dudit cosinus de deuxième direction $k_2$, déterminé au cours de la phase d'étalonnage, par une deuxième valeur de la deuxième accélération $a_y(t_{i1})$ acquise audit premier instant de mesure $t_{i1}$ ;
> • une multiplication de la valeur mise à jour dudit cosinus de troisième direction $k_3$, déterminé au cours de la phase d'étalonnage, par une deuxième valeur de la troisième accélération $a_z(t_{i1})$ acquise audit premier instant de mesure $t_{i1}$.

3. Procédé d'estimation d'une accélération longitudinale d'au moins un véhicule ferroviaire selon la revendication 2, dans lequel ledit filtre adaptatif est agencé pour déterminer lesdites valeurs mises à jour respectives du cosinus de première direction ki, du cosinus de deuxième direction $k_2$ et du cosinus de troisième direction $k_3$ par l'intermédiaire d'un algorithme adaptatif basé sur une technique des moindres carrés, LMS.

4. Procédé d'estimation d'une accélération longitudinale d'au moins un véhicule ferroviaire selon l'une quelconque des revendications précédentes, dans lequel la phase d'étalonnage est répétée pour une pluralité d'instants d'étalonnage.

5. Procédé d'estimation d'une accélération longitudinale d'au moins un véhicule ferroviaire selon l'une quelconque des revendications précédentes, dans lequel la phase d'étalonnage est réalisée à chaque premier démarrage de l'au moins un véhicule ferroviaire.

6. Procédé d'estimation d'une accélération longitudinale d'au moins un véhicule ferroviaire selon l'une quelconque des revendications précédentes, dans lequel ladite vitesse de référence longitudinale indépendante $v_{ref}$ du véhicule ferroviaire est une vitesse longitudinale déterminée à partir d'une vitesse angulaire d'un essieu du véhicule ferroviaire ;
ladite vitesse de référence longitudinale indépendante $v_{ref}$ étant disponible lorsque ledit essieu ne glisse pas.

7. Procédé d'estimation d'une accélération longitudinale d'au moins un véhicule ferroviaire selon l'une quelconque des revendications 1 à 6, dans lequel ladite vitesse de référence longitudinale indépendante $v_{ref}$ du véhicule ferroviaire est une vitesse longitudinale du véhicule ferroviaire fournie par un moyen de positionnement ;
ladite vitesse de référence longitudinale indépendante $v_{ref}$ étant disponible lorsque ledit moyen de positionnement communique avec un satellite.

8. Procédé d'estimation d'une accélération longitudinale d'au moins un véhicule ferroviaire selon l'une quelconque des revendications précédentes, dans lequel l'accélération longitudinale estimée $a_{lon}$ est déterminée pour une pluralité d'instants de mesure $(t_{i1}, t_{i2}, ..., t_{in})$ auxquels ladite vitesse de référence longitudinale indépendante $v_{ref}$ du véhicule ferroviaire est disponible ; la pluralité d'instants de mesure $(t_{i1}, t_{i2}, ..., t_{in})$ étant sélectionnée selon une période d'acquisition $\Delta Ti$.

9. Procédé d'estimation d'une accélération longitudinale d'au moins un véhicule ferroviaire selon l'une quelconque des revendications 1 à 7, dans lequel l'accélération longitudinale estimée $a_{lon}$ est déterminée de manière continue à partir d'un instant de disponibilité $t_{av}$ coïncidant avec un instant qui précède directement un instant d'indisponibilité auquel ladite vitesse de référence longitudinale indépendante $v_{ref}$ du véhicule ferroviaire n'est plus disponible, et dudit premier instant de mesure $t_{i1}$.

10. Procédé d'estimation d'une vitesse longitudinale d'au moins un véhicule ferroviaire comprenant les étapes suivantes :

> - l'exécution d'un procédé d'estimation d'une accélération longitudinale d'au moins un véhicule ferroviaire selon la revendication 8 ;

- la mesure de la valeur de la vitesse de référence longitudinale indépendante $V_{ref}(t_{av})$ dudit au moins un véhicule ferroviaire à un instant de disponibilité $t_{av}$ coïncidant avec un instant qui précède directement un instant d'indisponibilité auquel ladite vitesse de référence longitudinale indépendante $v_{ref}$ du véhicule ferroviaire n'est plus disponible ;

- la détermination de la vitesse longitudinale $v_{RV}$ du véhicule ferroviaire selon les étapes suivantes :

• le calcul de la somme des accélérations longitudinales estimées à la pluralité d'instants de mesure ($t_{i1}$, $t_{i2}$, ..., $t_{in}$) ;
• la multiplication de la somme des accélérations longitudinales déterminées à la pluralité d'instants de mesure ($t_{i1}$, $t_{i2}$, ..., $t_{in}$) par la période d'acquisition $\Delta T_i$ ;
• l'ajout de la valeur de la vitesse de référence longitudinale indépendante $V_{ref}(t_{av})$ dudit au moins un véhicule ferroviaire à l'instant de disponibilité $t_{av}$ au résultat de la multiplication de la somme des accélérations longitudinales estimées déterminées à la pluralité d'instants de mesure ($t_{i1}$, $t_{i2}$, ..., $t_{in}$) par la période d'acquisition $\Delta T_i$.

11. Procédé d'estimation d'une vitesse longitudinale d'au moins un véhicule ferroviaire selon la revendication 10, dans lequel l'étape de détermination de la vitesse longitudinale $v_{RV}(t_{in})$ du véhicule ferroviaire est réalisée par la formule suivante :

$$v_{RV}(t_{in}) = v_{ref}(t_{av}) + \sum_0^n a_{lon} * \Delta T_i$$

où :

- $v_{ref}(t_{av})$ est la vitesse de référence longitudinale indépendante $V_{ref}(t_{av})$ dudit au moins un véhicule ferroviaire à l'instant de disponibilité $t_{av}$ ;

- $\sum_0^n a_{lon}$ est la somme des accélérations longitudinales déterminées à la pluralité d'instants de mesure $t_{i1}$, $t_{i2}$, ..., $t_{in}$ et $n$ est le nombre de périodes d'acquisition qui se sont écoulées entre l'instant de disponibilité $t_{av}$ et l'instant de mesure ($t_{in}$) à partir duquel la vitesse longitudinale $v_{RV}(t_{in})$ est déterminée ; et

- $\Delta T_i$ est la période d'acquisition.

12. Procédé d'estimation d'une vitesse longitudinale d'au moins un véhicule ferroviaire comprenant les étapes suivantes :

- l'exécution d'un procédé d'estimation d'une accélération longitudinale d'au moins un véhicule ferroviaire selon la revendication 9 ;
- la mesure de la valeur de la vitesse de référence longitudinale indépendante $V_{ref}(t_{av})$ dudit au moins un véhicule ferroviaire à l'instant de disponibilité $t_{av}$ ;
- la détermination de la vitesse longitudinale $v_{RV}(t_{i1})$ du véhicule ferroviaire selon les étapes suivantes :

• le calcul de l'intégrale de l'accélération longitudinale estimée $a_{lon}$ déterminée de manière continue à partir de l'instant de disponibilité $t_{av}$ jusqu'audit premier instant de mesure $t_{i1}$ ;
• l'ajout de la valeur de la vitesse de référence longitudinale indépendante $V_{ref}(t_{av})$ dudit au moins un véhicule ferroviaire à l'instant de disponibilité $t_{av}$ au résultat de l'intégrale de l'accélération longitudinale estimée.

13. Procédé d'estimation d'une vitesse longitudinale d'au moins un véhicule ferroviaire selon la revendication 12, dans lequel l'étape de détermination de la vitesse longitudinale $v_{RV}(t_{i1})$ du véhicule ferroviaire est réalisée par la formule suivante :

$$v_{RV}(t_{i1}) = v_{ref}(t_{av}) + \int_{t_{av}}^{t_{i1}} a_{lon}\, dt$$

où :

- $v_{ref}(t_{av})$ est la vitesse de référence longitudinale indépendante $V_{ref}(t_{av})$ à l'instant de disponibilité $t_{av}$ ;

- $\int_{t_{av}}^{t_{i1}} a_{lon}(t)\, dt$ est l'intégrale de l'accélération longitudinale estimée $a_{lon}$ déterminée de manière continue à partir de l'instant de disponibilité $t_{av}$ jusqu'au premier instant de mesure $t_{i1}$ à partir duquel la vitesse longitudinale $v_{RV}(t)$ est déterminée.

**14.** Procédé d'estimation d'une vitesse longitudinale d'au moins un véhicule ferroviaire selon l'une quelconque des revendications 10 à 13, dans lequel le premier instant de mesure til coïncide à un retour à un instant de disponibilité $t_{ret\_av}$ auquel ladite vitesse de référence longitudinale indépendante $V_{ref}$ redevient disponible après avoir été indisponible.

FIG. 1

FIG. 2a

FIG. 2b

FIG. 3

FIG.4

FIG.5

EP 4 121 782 B1

## REFERENCES CITED IN THE DESCRIPTION

**Patent documents cited in the description**

- WO 2017042138 A

- US 2014136048 A1